# EUROPEAN PATENT SPECIFICATION

(11) **EP 2 584 918 B1**
(45) Date of publication and mention of the grant of the patent: **09.04.2014**
(21) Application number: 11725937.4
(22) Date of filing: 17.06.2011
(51) Int. Cl.: A23L 1/236, A23L 1/22

(54) **PRODUCT COMPRISING STEVIA**
PRODUKT MIT STEVIA
PRODUIT COMPRENANT DE LA STEVIA

(30) Priority: 25.06.2010 EP 10167311
(43) Date of publication of application: 01.05.2013
(73) Proprietor: Unilever PLC, London, Greater London EC4P 0DY (GB); Unilever NV, 3013 AL Rotterdam (NL)
(72) Inventor: ASUMADU-MENSAH, Aboagyewa, Tema (GH); BERGER, Matthias, CH-1204 Geneva (CH); JONES, Timothy, Graham, Bedford Bedfordshire MK44 1LQ (GB); POVEY, Kevin, John, Bedford Bedfordshire MK44 1LQ (GB); WILKINSON, Annabel, Louise, Bedford Bedfordshire MK44 1LQ (GB)
(74) Representative: Askew, Sarah Elizabeth
(86) International application number: PCT/EP2011/060174
(87) International publication number: WO 2011/161027

(56) References cited:
- EP-A1- 1 295 533
- WO-A1-2007/061757
- WO-A1-2008/112979
- WO-A2-2007/146559

## Description

### TECHNICAL FIELD OF THE INVENTION

The present invention relates to products comprising sweetening agents derived from *Stevia rebaudiana.* In particular the invention relates to the use of solids from *Aspalathus linearis* for providing improved products comprising sweetening agents derived from *Stevia rebaudiana.*

### BACKGROUND OF THE INVENTION

*Stevia rebaudiana* is a small perennial shrub that is native to South America. Both the plant *Stevia rebaudiana* and the sweet compounds derived from it are often referred to simply as "stevia". Stevia is used in several parts of the world as a non-caloric sweetener. For example, the leaves of S. *rebaudiana* have been used for centuries by the natives of Paraguay to sweeten beverages, and stevia sweeteners have been used in Japan since the 1970s.

Several diterpene glycosides have been extracted and purified from *Stevia rebaudiana,* induding a number of intensely sweet steviol glycosides. These glycosides are found in the stems, seeds and leaves of the S. *rebaudiana* plant, and are present at the highest concentration in the leaves (where they may comprise from 10 to 20% of the leaves by dry weight). The predominant steviol glycosides found in the leaves of *S. rebaudiana* are stevioside (typically 9.1 % by dry weight) and rebaudioside A (around 3.8% by dry weight).

Although stevia in its raw form is incredibly sweet, it also has a subtle liquorice essence and bitter notes are perceived at the back end of its taste profile. Both stevioside and rebaudioside A have been reported to contribute to the bitter aftertaste, particularly when used at concentrations corresponding to high sucrose equivalency (SE) levels.

Stevia has enormous commercial potential as a natural non-caloric sweetener. However, it is necessary to achieve an improved taste profile in order for this potential to be realised. Several approaches have been reported. For example, international patent application WO 2008/112979 (The Concentrate Manufacturing Company of Ireland) discloses the use of tea extracts for reducing the off-taste of non-nutritive sweeteners such as stevia. However, the beverages disclosed therein do not comprise solids from *Aspalathus linearis.*

We have found that the use of solids from *Aspalathus linearis* (rooibos) unexpectedly allows for the formulation of products with excellent taste characteristics when natural sweetening agents derived from *Stevia rebaudiana* (Bertoni) are incorporated therein.

### TESTS AND DEFINITIONS

As used herein the term "comprising" encompasses the terms "consisting essentially of" and "consisting of". All percentages and ratios contained herein are calculated by weight unless otherwise indicated. It should be noted that in specifying any range of values or amount, any particular upper value or amount can be associated with any particular lower value or amount.

The disclosure of the invention as found herein is to be considered to cover all embodiments as found in the claims as being multiply dependent upon each other irrespective of the fact that claims may be found with multiple dependency or redundancy.

### Stevia

The term "stevia-derived" is used herein to refer to material that can be obtained from the stems, leaves and/or seeds of the *Stevia rebaudiana* (Bertoni) plant.

A number of intensely sweet steviol glycosides are known to occur naturally in the *Stevia rebaudiana* plant. The steviol glycosides include stevioside, steviobioside, rebaudioside A, rebaudioside B, rebaudioside C, rebaudioside D, rebaudioside E, dulcoside A and dulcoside B. As used herein the terms "sweetening agent derived from *Stevia rebaudiana"* and "stevia-derived sweetening agent" are used interchangeably and refer to a sweetening agent comprising one or more steviol glycoside.

The term "stevia-sweetened" is used herein to refer to a product which comprises a stevia-derived sweetening agent. Stevia-sweetened products may additionally comprise one or more nutritive and/or non-nutritive sweetener that is not derived from S. *rebaudiana.* For example in certain embodiments stevia-sweetened products may additionally comprise one or more sweetener selected from sucrose, glucose, fructose, lactose, trehalose, maltose, aspartame, saccharin, acesulfame K, erythritol, xylitol, sorbitol, mannitol, glycerol, maltitol, lactitol, isomalt, alitame, thaumatin, cyclamate, glycyrrhizin, neohesperidine dihydrochalcone, sucralose, monellin, neotame, mogroside V, and mixtures thereof.

### Rooibos

*Aspalathus linearis* (also known as rooibos or redbush) is a shrub-like leguminous bush native to the Western Cape region of South Africa. As used herein the terms "solids from *Aspalathus linearis" and* "rooibos solids" are used interchangeably and refer to dry material that can be extracted with a solvent from the leaves and/or stems of the plant *Aspalathus linearis.* The term "rooibos extract" refers to an extract that comprises solids from *Aspalathus linearis.*

### Beverage

As used herein the term "beverage" refers to a substantially aqueous drinkable composition suitable for human consumption. Preferably the beverage comprises at least 85% water by weight of the beverage, more preferably at least 90% and most preferably from 95 to 99.9%.

As used herein the term "packaged" means that the beverage is contained within a sealed package. Non-limiting examples of suitable packages include bottles, cans, cartons, pouches and sachets.

### Tea

As used herein "tea" refers to material from *Camellia sinensis* var. *sinensis* and/or *Camellia sinensis* var. *assamica.* "Black tea" refers to substantially fermented tea, "oolong tea" refers to partially fermented tea and "green tea" refers to substantially unfermented tea.

"Fermentation" refers to the oxidative and hydrolytic process that tea undergoes when certain endogenous enzymes and substrates are brought together. Fermentation may be supplemented by the action of exogenous enzymes such as oxidases, laccases and peroxidises.

### Tea-based beverage

As used herein the term "tea-based beverage" refers to a beverage comprising at least 0.01% tea solids by weight of the beverage. Preferably the tea-based beverage comprises from 0.04 to 3% tea solids, more preferably from 0.06 to 2%, most preferably from 0.1 to 1%. The term "tea solids" refers to dry material extractable from the leaves of the plant *Camellia sinensis* var. *sinensis* and/or *Camellia sinensis* var. *assamica.*

### SUMMARY OF THE INVENTION

In a first aspect, the present invention provides a product comprising a sweetening agent derived from *Stevia rebaudiana* that comprises rebaudioside A, characterised in that the product comprises solids from *Aspalathus linearis*, wherein at least 50% by weight of the sweetening agent comprises rebaudioside A. We have found that the use of solids from *Aspalathus linearis* allows the formulation of stevia-sweetened products with excellent taste characteristics. In particular, we have found that use of solids from *Aspalathus linearis* can be used to alleviate and/or eliminate the bitterness aftertaste and/or off-notes of stevia-derived sweetening agents that comprise rebaudioside A.

In another aspect, the present invention provides use of solids from *Aspalathus linearis* for reducing or eliminating bitterness aftertaste of a sweetening agent derived from *Stevia rebaudiana.* In a preferred embodiment, solids from *Aspalathus linearis* are used to improve the taste profile of sweetening agents that comprise rebaudioside A.

In a further aspect, the present invention provides a method, of manufacturing a product comprising a sweetening agent derived from Stevia rebaudiana and solids from *Aspalathus linearis,* wherein a substance comprising the sweetening agent is combined with a substance comprising the solids from *Aspalathus linearis*, and wherein at least 50% by weight of the sweetening agent comprises rebaudioside A. It is preferred that the product is a beverage product.

### DETAILED DESCRIPTION

The product of the present invention may be a food or a beverage product, or a precursor for preparing such a product. Preferably the product is a beverage, more preferably it is a packaged beverage.

The mass of the product will depend on the format of the product. For convenience of transport and handling it is preferred that the product has a total mass of 0.5 g to 2100 g, more preferably 1 g to 1100 g and most preferably 2 g to 550 g.

The development of products employing non-nutritive sweeteners presents challenges in addressing associated bitterness and/or off-tastes. The stevia-derived sweetening agent of the present invention comprises rebaudioside A, which is the sweetest and most stable of the steviol glycosides. Rebaudioside A has been reported to have less bitterness aftertaste and/or off-notes than other sweet compounds derived from the *S. rebaudiana* plant. In a preferred embodiment at least 75% by weight of the stevia-derived sweetening agent comprises rebaudioside A, more preferably at least 95% and still more preferably from 97% to 100%.

In order produce a product with an initial sweetness that lingers in a pleasing manner it is preferred that the product comprises at least 0.001% by weight of the stevia-derived sweetening agent. More preferably the product comprises from 0.005 to 5.0% by weight of the sweetening agent, still more preferably from 0.01 to 3.5% and most preferably from 0.015 to 2.5%.

We have found that solids from *Aspalathus linearis* bring a desirable complexity and/or smoothness to the taste profile of stevia-sweetened products. In order to achieve a product with a desirable taste profile it is preferred that the product comprises at least 0.001 % solids from *Aspalathus linearis* by weight, more preferably from 0.005 to 5.0%, still more preferably from 0.01 to 3.5% and most preferably from 0.015 to 2.5%.

We have found that the use of solids from *Aspalathus linearis* is well-suited to delivering stevia-sweetened beverages with desirable taste characteristics. Such beverages are found to lack the bitterness aftertaste and/or off-notes typically associated with stevia-derived sweeteners. Furthermore, it appears that the use of rooibos solids in steviasweetened beverage products results in a smooth taste profile and/or adds a pleasing complexity to the flavour of the beverage. Therefore, in a preferred embodiment the product is a beverage, preferably a packaged beverage. It is also envisaged that the product of the invention may be a beverage precursor.

It is often desirable to sweeten tea-based beverages, specially if they contain high levels of bitter-tasting polyphenols (e.g. catechins, theaflavins). Therefore, in one particular embodiment, it is preferred that the product of the present invention is a tea-based beverage.

Where the product is a beverage product, it is preferred that it comprises solids from *Aspalathus linearis* in an amount from 10 to 1000 mg/L, more preferably from 70 to 500 mg/L, still more preferably from 100 to 450 mg/L and most preferably from 150 to 400 mg/L.

Where the product is a beverage product, it is preferred that it comprises from 10 to 600 mg/L of the stevia-derived sweetening agent, more preferably from 100 to 500 mg/L and most preferably from 150 to 400 mg/L.

From a standpoint of microbial stability and taste, it is preferred that the product has an acidic pH. In particular, the pH (at 20°C) may be from 2 to 7, more preferably from 2 to 5, most preferably from 2.5 to 4.

The product of the present invention may be manufactured by any suitable means. The product is preferably manufactured by a method wherein a substance comprising a sweetening agent derived from *Stevia rebaudiana* that comprises rebaudioside A is combined with a substance comprising solids from *Aspalathus linearis.* At least 50% by weight of the sweetening agent derived from *Stevia rebaudiana* comprises rebaudioside A, more preferably at least 75% by weight, still more preferably at least 95% by weight, more preferably still from 97% to 100% by weight.

### EXAMPLES

The present invention will now be illustrated by reference to the following non-limiting examples.

### Example 1

Solids from *Aspalathus linearis* ("rooibos solids") were assessed for their effect on the taste profile of stevia-sweetened beverage products. Stevia-sweetened beverage products comprising different types of tea solids from *Camellia sinensis* (green tea, black tea) were also assessed. The products contained 175 mg/L of either rooibos solids or tea solids.

The products were qualitatively assessed in a tasting session. The products were tasted blind (i.e. the individuals did not know the identity of the products presented). The stevia-sweetened product comprising rooibos solids was perceived as having a more favourable taste profile than the equivalent products comprising either black tea solids or green tea solids.

### Example 2

Three mid-calorie beverage products were prepared according to an established formulation comprising flavourings and preservatives. Each beverage product was sweetened in a uniform manner using a combination of sucrose and rebaudioside A. Rooibos solids (provided by rooibos extract I) were present in products 2 and 3, but not in product 1 (see Table 1).

**TABLE 1**

| **Ingredient (g/L)** | **Product 1** | **Product 2** | **Product 3** |
|---|---|---|---|
| Green tea powder | 1.4 | 1.4 | 1.4 |
| Sucrose | 45.0 | 45.0 | 45.0 |
| Rebaudioside A* | 0.18 | 0.18 | 0.18 |
| Rooibos extract I^{†} | - | 0.5 | 1.0 |
| | | | |
| **Rooibos solids (mg/L)** | - | 175 | 350 |

| | | | |
|---|---|---|---|
| *From PureCircle (97% rebaudioside A) ^{†}From Plantextrakt GmbH & Co. KG (35% rooibos solids). | | | |

The beverage products were filled into 330 ml cans and sealed. The cans were then pasteurised at 70 °C for 10 minutes in a batch pasteuriser.

The beverage products were qualitatively assessed in a tasting session. The individuals who participated in this session did not know the composition of the products presented. Product 1 was perceived to have bitter notes at the back end of the taste profile. However, the bitter aftertaste was noticeable reduced in product 2 (175 mg/L rooibos solids) and product 3 (350 mg/L rooibos solids) compared to product 1. Furthermore, incorporating rooibos solids was judged to bring a desirable complexity and smoothness to the taste profile of these products. An initial sweetness that lingered on in a pleasing manner was also perceived on drinking products 2 and 3.

### Example 3

Three diet beverage products were prepared according to an established formulation comprising flavourings and preservatives. Each beverage product was sweetened in a uniform manner using a combination of erythritol and rebaudioside A. Rooibos solids (provided by rooibos extract I) were present in products 5 and 6, but not in the product 4 (see Table 2).

**TABLE 2**

| **Ingredient (g/L)** | **Product 4** | **Product 5** | **Product 6** |
|---|---|---|---|
| Green tea powder | 1.4 | 1.4 | 1.4 |
| Erythritol | 10.0 | 10.0 | 10.0 |
| Rebaudioside A* | 0.3 | 0.3 | 0.3 |
| Rooibos extract I^{†} | - | 0.5 | 1.0 |
| | | | |
| **Rooibos solids (mg/L)** | - | 175 | 350 |

| | | | |
|---|---|---|---|
| *From PureCircle (97% rebaudioside A) ^{†}From Plantextrakt GmbH & Co. KG (35% rooibos solids). | | | |

The beverage products were filled into 330 ml cans and sealed. The cans were then pasteurised at 70°C for 10 minutes in a batch pasteuriser.

The beverage products were qualitatively assessed in a tasting session. The individuals who participated in this session did not know the composition of the products presented. Product 4 was found to have an undesirable taste profile. The taste panel reported that this product lacked sweetness, and that the flavour was bitter and quite sour. Both product 5 (175 mg/L rooibos solids) and product 6 (350 mg/L rooibos solids) were assessed as having a more desirable taste profile than product 4. The addition of rooibos solids was judged to add complexity to the flavour and to provide smoothness to the taste profile.

### Example 4

Five mid-calorie beverage products were prepared according to an established formulation comprising flavourings and preservatives. Each beverage product was sweetened in a uniform manner using a combination of sucrose and rebaudioside A. Product A was a control product that did not contain rooibos solids. Products B, C, D and E (collectively referred to as "rooibos products") all contained 175 mg/L rooibos solids. As can be seen from Table 3, the rooibos solids in products B, C, D and E were provided by rooibos extracts from different sources.

**TABLE 3**

| **Ingredient (g/L)** | **product A** | **product B** | **Product C** | **Product D** | **Product E** |
|---|---|---|---|---|---|
| Sucrose | 45.0 | 45.0 | 45.0 | 45.0 | 45.0 |
| Rebaudioside A* | 0.18 | 0.18 | 0.18 | 0.18 | 0.18 |
| Rooibos extract I⁺ | - | 0.5 | - | - | - |
| Rooibos extract II^{‡} | - | - | 0.486 | - | - |
| Rooibos extract III^{†} | - | - | - | 0.175 | - |
| Rooibos extract IV** | - | - | - | - | 0.583 |
| | | | | | |
| **Rooibos solids (mg/L)** | - | 175 | 175 | 175 | 175 |

| | | | | | |
|---|---|---|---|---|---|
| *From PureCircle (97% rebaudioside A) ⁺From Plantextrakt GmbH & Co. KG (35% rooibos solids). ^{‡}From Plantextrakt GmbH & Co. KG (36% rooibos solids). ^{†}From Afriplex (Pty) Ltd. (100% rooibos solids). **From Afriplex (Pty) Ltd. (30% rooibos solids). | | | | | |

The beverage products were filled into 330 ml cans and sealed. The cans were then pasteurised at 70°C for 10 minutes in a batch pasteuriser.

The beverage products were qualitatively assessed in a tasting session. The individuals who participated in this session did not know the composition of the products presented. Product A was perceived to have bitter notes at the back end of the taste profile. The taste panel judged each of products B, C, D and E to have an improved aftertaste and a smoother taste profile than product A. No marked difference between the four rooibos products were reported, although product D (formulated with a rooibos extract comprising 100% rooibos solids) was felt to have a slightly cleaner flavour.

The data from the tasting session clearly indicated that the four rooibos products are not significantly different to each other in taste, flavour or mouthfeel. This implies that the presence of rooibos solids (regardless of their source) is important when it comes to formulating stevia-sweetened products with excellent taste characteristics.

## Claims

1. A product comprising a sweetening agent derived from Stevia rebaudiana and solids from Aspalathus linearis, wherein at least 50% by weight of the sweetening agent comprises rebaudioside A.

2. A product as claimed in claim 1 wherein at least 75% by weight of the sweetening agent comprises rebaudioside A.

3. A product as claimed in claim 1 or claim 2 wherein the product comprises at least 0.001% by weight of the sweetening agent.

4. A product as claimed in any one of the preceding claims wherein the product comprises from 0.005% to 5.0% by weight of the sweetening agent.

5. A product as claimed in any one of the preceding claims wherein the product comprises at least 0.001% by weight solids from Aspalathus linearis.

6. A product as claimed in any one of the preceding claims wherein the product comprises solids from Aspalathus linearis in an amount from 0.005% to 5.0% by weight.

7. A product as claimed in any one of the preceding claims wherein the product is a beverage, preferably a tea-based beverage.

8. A product as claimed in claim 7 wherein the product comprises solids from Aspalathus linearis in an amount from 10 to 1000 mg/L.

9. A product as claimed in claim 7 or claim 8 wherein the product comprises the sweetening agent in an amount from 10 to 600 mg/L.

10. A product as claimed in any one of claims 7 to 9 wherein the product has a pH of from 2 to 7.

11. A product as claimed in any one of the preceding claims wherein the product additionally comprises one or more nutritive and/or non-nutritive sweetener that is not derived from Stevia rebaudiana.

12. Use of solids from Aspalathus linearis for reducing or eliminating bitterness aftertaste of a sweetening agent derived from Stevia rebaudiana.

13. A use according to claim 12 wherein the sweetening agent comprises rebaudioside A.

14. A method of manufacturing a product comprising a sweetening agent derived from Stevia rebaudiana and solids from Aspalathus linearis, wherein a substance comprising the sweetening agent is combined with a substance comprising the solids from Aspalathus linearis, and wherein at least 50% by weight of the sweetening agent comprises rebaudioside A.

15. A method according to claim 14 wherein the product is a beverage.

## Patentansprüche

1. Produkt, das ein süßendes Mittel, das von Stevia rebaudiana abgeleitet ist, und Feststoffe von Aspalathus linearis aufweist, wobei mindestens 50 Gew.-% des süßenden Mittels Rebaudiosid A sind.

2. Produkt nach Anspruch 1,
wobei mindestens 75 Gew.-% des süßenden Mittels Rebaudiosid A sind.

3. Produkt nach Anspruch 1 oder 2,
wobei das Produkt mindestens 0,001 Gew.-% des süßenden Mittels aufweist.

4. Produkt nach einem der vorstehenden Ansprüche,
wobei das Produkt 0,005 bis 5,0 Gew.-% des süßenden Mittels aufweist.

5. Produkt nach einem der vorstehenden Ansprüche,
wobei das Produkt mindestens 0,001 Gew.-% Feststoffe von Aspalathus linearis aufweist.

6. Produkt nach einem der vorstehenden Ansprüche,
wobei das Produkt Feststoffe von Aspalathus linearis in einer Menge von 0,005 bis 5,0 Gew.-% aufweist.

7. Produkt nach einem der vorstehenden Ansprüche,
wobei das Produkt ein Getränk, vorzugsweise ein Getränk auf Teebasis ist.

8. Produkt nach Anspruch 7,
wobei das Produkt Feststoffe von Aspalathus linearis in einer Menge von 10 bis 1000 mg/l aufweist.

9. Produkt nach Anspruch 7 oder 8,
wobei das Produkt das süßende Mittel in einer Menge von 10 bis 600 mg/l aufweist.

10. Produkt nach einem der Ansprüche 7 bis 9,
wobei das Produkt einen pH-Wert von 2 bis 7 hat.

11. Produkt nach einem der vorstehenden Ansprüche,
wobei das Produkt ferner einen oder mehrere nahrhafte und/oder nicht-nahrhafte Süßstoffe aufweist, die nicht von Stevia rebaudiana abgeleitet sind.

12. Verwendung von Feststoffen von Aspalathus linearis zur Verminderung oder Beseitigung des bitteren Nachgeschmacks eines süßenden Mittels, das von Stevia rebaudiana abgeleitet ist.

13. Verwendung nach Anspruch 12,
wobei das süßende Mittel Rebaudiosid A aufweist.

14. Verfahren zum Herstellen eines Produktes, das ein süßendes Mittel, das von Stevia rebaudiana abgeleitet ist, und Feststoffe von Aspalathus linearis aufweist,
wobei ein Stoff, der das süßende Mittel aufweist, mit einem Stoff gemischt wird, der die Feststoffe von Aspalathus linearis aufweist, und wobei mindestens 50 Gew.-% des süßenden Mittels Rebaudiosid A sind.

15. Verfahren nach Anspruch 14,
wobei das Produkt ein Getränk ist.

## Revendications

1. Produit comprenant un agent édulcorant dérivé de *Stevia rebaudiana* et des fractions solides provenant d'*Aspalathus linearis,* dans lequel au moins 50 % en poids de l'agent édulcorant est constitué par du rebaudioside A.

2. Produit selon la revendication 1, dans lequel au moins 75 % en poids de l'agent édulcorant est constitué par du rebaudioside A.

3. Produit selon la revendication 1 ou la revendication 2, dans lequel le produit comprend au moins 0,001 % en poids d'agent édulcorant.

4. Produit selon l'une quelconque des revendications précédentes, dans lequel le produit comprend de 0,005 à 5,0 % en poids d'agent édulcorant.

5. Produit selon l'une quelconque des revendications précédentes, dans lequel le produit comprend au moins 0,001 % en poids de fractions solides provenant d'*Aspalathus linearis.*

6. Produit selon l'une quelconque des revendications précédentes, dans lequel le produit comprend des fractions solides provenant d'*Aspalathus linearis* en une quantité de 0,005 à 5,0 % en poids.

7. Produit selon l'une quelconque des revendications précédentes, dans lequel le produit est une boisson, de préférence une boisson à base de thé.

8. Produit selon la revendication 7, dans lequel le produit comprend des fractions solides provenant d'*Aspalathus linearis* en une quantité de 10 à 1000 mg/L.

9. Produit selon la revendication 7 ou la revendication 8, dans lequel le produit comprend l'agent édulcorant en une quantité de 10 à 600 mg/L.

10. Produit selon l'une quelconque des revendications 7 à 9, dans lequel le produit a un pH de 2 à 7.

11. Produit selon l'une quelconque des revendications précédentes, dans lequel le produit comprend en plus un ou plusieurs édulcorants caloriques et/ou non caloriques qui ne sont pas dérivés de *Stevia rebaudiana.*

12. Utilisation de fractions solides d'*Aspalathus linearis* pour réduire ou éliminer l'arrière-goût amer d'un agent édulcorant dérivé de *Stevia rebaudiana.*

13. Utilisation selon la revendication 12, dans laquelle l'agent édulcorant comprend du rebaudioside A.

14. Procédé de préparation d'un produit comprenant un agent édulcorant dérivé de *Stevia rebaudiana* et des fractions solides provenant d'*Aspalathus linearis,* dans lequel une substance comprenant l'agent édulcorant est combinée à une substance comprenant les fractions solides provenant d'*Aspalathus linearis,* et dans lequel au moins 50 % de l'agent édulcorant est constitué par du rebaudioside A.

15. Procédé selon la revendication 14, dans lequel le produit est une boisson.
